# EUROPÄISCHE PATENTSCHRIFT

(11) **EP 3 658 447 B1**
(45) Veröffentlichungstag und Bekanntmachung des Hinweises auf die Patenterteilung: **29.12.2021**
(21) Anmeldenummer: 18731826.6
(22) Anmeldetag: 15.06.2018
(51) Int. Cl.: B62J 9/24, B62J 9/23

(54) **TRÄGERANORDNUNG FÜR SEITLICHE GEPÄCKBEHÄLTNISSE EINES MOTORRADES**
MOUNTING STRUCTURE FOR MOTORCYCLE SIDE CASES
SUPPORT POUR VALISES LATÉRALES D'UNE MOTOCYCLETTE

(30) Priorität: 26.07.2017 DE 102017212790
(43) Veröffentlichungstag der Anmeldung: 03.06.2020
(73) Patentinhaber: Bayerische Motoren Werke Aktiengesellschaft, 80809 München (DE)
(72) Erfinder: GOLLING, Adrian, 82194 Gröbenzell (DE); MÜHLMANN, Mathias, 82140 Olching (DE)
(86) Internationale Anmeldenummer: PCT/EP2018/065917
(87) Internationale Veröffentlichungsnummer: WO 2019/020273

(56) Entgegenhaltungen:
- DE-A1- 3 824 610
- DE-U1- 29 906 623
- FR-A1- 2 896 762
- JP-U- S55 101 678

## Beschreibung

Die Erfindung betrifft eine Verbindungsanordnung zur Befestigung von seitlichen Gepäckbehältnissen an einem Motorrad oder einem motorradähnlichen Fahrzeug, gemäß dem Oberbegriff des Patentanspruchs 1, sowie ein entsprechend ausgestattetes Motorrad oder motorradähnliches Fahrzeug gemäß dem Oberbegriff des Patentanspruchs 12.

Seitentaschen oder Seitenkoffer sind aus dem Stand der Technik bekannt und stellen Gepäckbehältnisse dar, die üblicherweise seitlich im Heckbereich eines Motorrads befestigt werden und bei Bedarf abgenommen werden können. Vergleichbare Anordnungen sind unter anderem auch für motorradähnliche Fahrzeuge, wie Motorroller beziehungsweise Scooter, insbesondere zweirädrige, dreirädrige oder vierrädrige Motorroller, sowie für Quads oder Trikes einsetzbar. Aus der EP 2 783 955 B1 ist eine derartige Anordnung beispielsweise bekannt.

Es hat sich gezeigt, dass diese seitlichen Gepäckbehältnisse, insbesondere in einem mit Gepäck beladenen Zustand, eine Pendelneigung des Motorrades begünstigen beziehungsweise verstärken können. Daher werden üblicherweise fahrzeugseitig große Anstrengungen unternommen, um eine derartige Pendelneigung zu reduzieren, beispielsweise durch aufwendige Anpassungen des Fahrwerks oder durch aufwendige Gepäckträgersysteme. Beispielsweise können Letztere gemäß der US 9,010,598 B2 einen parallelogrammartigen Unterbau umfassen, an dem die seitlichen Gepäckbehältnisse befestigt sind.

Mit Hilfe dieser beweglichen Lagerung wird eine Bewegungsentkopplung erzielt, die eine Übertragung von auf das Fahrzeug einwirkenden Kräften, insbesondere bei schnellen Lastwechseln, auf die seitlichen Gepäckbehältnisse reduziert und somit einer Stabilisierung des Gesamtfahrzeugs dient.

Es hat sich jedoch gezeigt, dass die bewegliche Lagerung gegenüber dem Gesamtfahrzeug eine konstruktive Herausforderung darstellt, insbesondere hinsichtlich einer Abstimmung zwischen der beabsichtigten schwingungsdämpfenden Wirkung und einer ausreichenden Festigkeit für eine stabile und belastbare Verbindung.

Weitere Befestigungsanordnungen sind beispielsweise aus der gattungsgemässen FR 2 896 762 A1, sowie den Dokumenten

Jp S55 101678 U, DE 38 24 610 A1 und DE 299 06 623 U1 bekannt. Eine Aufgabe der Erfindung ist es daher, ein Fahrzeug mit seitlichen Gepäckbehältnissen bereitzustellen, welches eine schwingungsdämpfende Wirkung bei dennoch einfachem Aufbau und leichter Handhabung ermöglicht. Diese Aufgabe wird gelöst mit einer Verbindungsanordnung zur Befestigung von seitlichen Gepäckbehältnissen an einem Motorrad oder motorradähnlichen Fahrzeug gemäß dem Gegenstand des Patentanspruchs 1 sowie einem Motorrad oder motorradähnlichen Fahrzeug mit den Merkmalen des Patentanspruchs 12.

Demnach wird eine Verbindungsanordnung zur Befestigung von seitlichen Gepäckbehältnissen an einem Motorrad oder einem motorradähnlichen Fahrzeug, bereitgestellt, mit:
- einem hinteren Fahrzeugrahmenabschnitt, und
- einem Trägerelement, welches quer zu einer Längsrichtung des Fahrzeugrahmenabschnitts erstreckt ausgebildet ist und an einem seitlichen linken Ende zum Verbinden mit einem linken Gepäckbehältnis und an einem seitlichen rechten Ende zum

Verbinden mit einem rechten Gepäckbehältnis ausgebildet ist, wobei das Trägerelement relativbeweglich zu dem Fahrzeugrahmenabschnitt mit diesem verbunden istund das Trägerelement im Bereich des linken und des rechten Endes jeweils einen seitlichen Tragarm umfasst sowie zwei die seitlichen Tragarme miteinander verbindende Querträger, wobei die beiden seitlichen Tragarme jeweils zum Verbinden mit dem jeweils zugehörigen seitlichen Gepäckbehältnis ausgebildet sind, wobei das Trägerelement als Rahmenelement ausgebildet ist, wobei die seitlichen Tragarme an ihren Enden jeweils durch einen Querträger miteinander verbunden sind.

Die Verbindungsanordnung sieht also einen Fahrzeugrahmenabschnitt vor, der in einem am Fahrzeug (Motorrad oder motorradähnliches Fahrzeug) verbauten Zustand üblicherweise mit einer Struktur beziehungsweise einem (restlichen) Fahrzeugrahmen des Kraftfahrzeugs verbunden ist. Der Fahrzeugrahmenabschnitt kann beispielsweise einen hinteren Abschnitt des Fahrzeugrahmens im Bereich eines Hinterrades bilden und einen im Wesentlichen waagrecht orientierten Abschnitt definieren. Dieser kann in Fahrzeughöhenrichtung unterhalb eines Sitzes oder einer Sitzbank angeordnet sein. Ebenfalls beispielsweise kann der Fahrzeugrahmenabschnitt dazu ausgebildet sein, zumindest einen Teil des Sitzes oder einer Sitzbank abzustützen.

Das Trägerelement ist derart mit dem Fahrzeugrahmenabschnitt verbunden, dass das Trägerelement zumindest in dessen Querrichtung erstreckt ausgebildet ist und zusätzlich eine Relativbewegung des Trägerelements bezüglich des Fahrzeugrahmenabschnitts möglich ist. Die Querrichtung ist quer zu der Längsrichtung des Fahrzeugrahmenabschnitts ausgerichtet, also in einer Breitenrichtung des Fahrzeugrahmenabschnitts. Zudem ist das Trägerelement an seinen beiden Enden jeweils mit einem der beiden Gepäckbehältnisse verbunden. Diese können also beispielsweise auf einer linken beziehungsweise einer rechten Seite des Fahrzeugrahmenabschnitts angeordnet sein. Die Längsrichtung des Fahrzeugrahmenabschnitts entspricht im verbauten Zustand vorzugsweise einer Längsrichtung des Kraftfahrzeugs selbst. Gemäß einer Ausführungsform kann das Trägerelement auf einer Oberseite des Fahrzeugrahmenabschnitts angeordnet und relativbeweglich befestigt sein. Dies bedeutet, dass das Trägerelement in der Fahrzeughöhenrichtung oberhalb des Fahrzeugrahmenabschnitts positioniert ist. Ist ein Sitz beziehungsweise eine Sitzbank in diesem Bereich vorhanden, so kann das Trägerelement zudem unterhalb des Sitzes beziehungsweise der Sitzbank, also in der Höhenrichtung zwischen dem Fahrzeugrahmenabschnitt und dem Sitz/der Sitzbank, angeordnet sein.

Alternativ ist aber auch eine Anordnung unterhalb des Fahrzeugrahmenabschnitts möglich, so dass das Trägerelement auf einer Unterseite des Fahrzeugrahmenabschnitts angeordnet und relativbeweglich an diesem befestigt ist. Ebenfalls alternativ kann das Trägerelement aber auch innerhalb des Fahrzeugrahmenabschnitts angeordnet sein und sich durch diesen hindurch erstrecken.

Als Gepäckbehältnisse sind beispielsweise Seitenkoffer oder Seitentaschen zu verstehen, die mit den jeweiligen Enden des Trägerelements verbunden sind oder werden. Vorzugsweise ist die jeweilige Verbindung als bei Bedarf lösbare Verbindung ausgestaltet, um das jeweilige Gepäckbehältnis vom Kraftfahrzeug zu entfernen, wie nachfolgend noch im Detail beschrieben wird.

Das Trägerelement umfasst im Bereich des linken und des rechten Endes jeweils einen seitlichen Tragarm sowie zwei die seitlichen Tragarme miteinander verbindenden Querträger, wobei die beiden seitlichen Tragarme jeweils zum Verbinden mit dem jeweils zugehörigen seitlichen Gepäckbehältnis ausgebildet sind.

So können die seitlichen Tragarme beispielsweise parallel und seitlich beabstandet zu einer in Längsrichtung ausgerichteten Mittelachse oder im Wesentlichen parallel beabstandet zu einer Seite des Fahrzeugrahmenabschnitts ausgerichtet sein. Dagegen können die Querträger in der Querrichtung des Fahrzeugrahmenabschnitts ausgerichtet sein, um die beiden seitlichen Tragarme miteinander zu verbinden. Gemäß einer beispielhaften nicht beanspruchten Ausführungsform kann bei Verwendung eines einzelnen Querträgers somit (in einer Draufsicht betrachtet) ein U- oder Doppel-T-förmiges Trägerelement erzeugt werden.

Erfindungsgemäß sind zwei Querträger vorgesehen.

Dies bietet erfindungsgemäß die Möglichkeit das Trägerelement als Rahmenelement, insbesondere als rechteckiges oder trapezförmiges Rahmenelement, auszuführen, wobei die seitlichen Tragarme an ihren Enden jeweils durch einen der Querträger miteinander verbunden sind. Die Ausbildung des Trägerelements als Rahmenelement ermöglicht auf diese Weise die Bereitstellung eines in sich geschlossenen Rahmens, welcher eine vorteilhaft erhöhte Steifigkeit, insbesondere eine erhöhte Verwindungssteifigkeit, aufweist. In jedem Fall kann das Trägerelement optional als einstückiges Bauteil hergestellt sein. Dies kann durch eine einteilige Fertigung erfolgen oder durch stoffschlüssiges Verbinden mehrerer separat erzeugter Einzelteile, wie beispielsweise durch ein Verschweißen der seitlichen Tragarme mit dem einen oder den mehreren Querträgern.

Die genannte Relativbewegung kann zum Beispiel durch eine translatorische Bewegung quer zu der Längsrichtung des Fahrzeugrahmenabschnitts definiert sein. Dies bedeutet, dass das Trägerelement längsbeweglich in der Querrichtung relativ zu dem Fahrzeugrahmenabschnitt und damit ebenfalls quer zu dem gesamten Kraftfahrzeug bewegbar ist. Dies bietet die Möglichkeit seitliche Bewegungen, wie beispielsweise Pendelbewegungen des Kraftfahrzeugs, durch die Trägheit der Gepäckbehältnisse aufgrund der geschaffenen Bewegungsentkopplung zu dämpfen.

Für die translatorische Bewegung kann zum Beispiel ein Bewegungsumfang y im Bereich von -20 mm ≤ y ≤ +20 mm, vorzugsweise10 mm ≤ y ≤ +10 mm, besonders bevorzugt -7 mm ≤ y ≤ +7 mm vorgesehen sein. Dies bedeutet, dass das mit dem Fahrzeugrahmenabschnitt verbundene Trägerelement aus einer mittigen Neutralposition wahlweise um maximal 20 mm beziehungsweise maximal 10 mm oder maximal 7 mm in Richtung der linken Seite oder in Richtung der rechten Seite verschoben werden kann. Auf diese Weise wird eine wirkungsvolle Bewegungsentkopplung bereitgestellt, so dass eine Dämpfung von Pendelbewegungen des Fahrzeugs ermöglicht wird.

Das Trägerelement kann zum Beispiel über eine Anzahl von Lagerpunkten translatorisch bewegbar mit dem Fahrzeugrahmenabschnitt verbunden sein, wobei die Lagerpunkte jeweils einen Führungsabschnitt zur Führung der translatorischen Bewegung aufweisen. Beispielsweise können die Lagerpunkte Langlöcher oder Führungsnuten aufweisen, welche als Führungsabschnitte für entsprechende Verbindungsstifte dienen, welche das Trägerelement mit dem Fahrzeugrahmenabschnitt verbinden. Vorzugsweise sind die Verbindungsstifte fest mit dem Fahrzeugrahmenabschnitt verbunden und die Führungsabschnitte dem Trägerelement zugeordnet, beziehungsweise in diesem ausgebildet. Selbstverständlich ist aber ebenso eine umgekehrte Anordnung möglich.

Jedenfalls sind die Langlöcher vorzugsweise quer zur Längsrichtung des Fahrzeugrahmenabschnitts und somit in der beschriebenen Querrichtung erstreckt, um die entsprechend ausgerichtete Relativbewegung zu führen. Eine jeweilige Länge der Führungsabschnitte ist auf den beabsichtigten Bewegungsumfang abgestimmt, so dass die Führungsabschnitte zumindest die entsprechende Länge aufweisen, oder länger gewählt sind. Weisen sie die gleiche Länge auf, so können die jeweiligen Enden der Führungsabschnitte als Anschläge zur Begrenzung des Bewegungsumfangs genutzt werden. Alternativ kann die jeweilige Länge aber auch länger gewählt werden, so dass die Enden nicht als Anschlag dienen, wobei in diesem Fall anderweitige Anschläge zur Begrenzung des Bewegungsumfangs vorgesehen werden können.

Gemäß einer weiteren Ausführungsform kann die Verbindungsanordnung mindestens zwei quer zur Längsrichtung des Fahrzeugrahmenabschnitts ausgerichtete Schienenelemente umfassen, wobei das Trägerelement beispielsweise mittels Gleitlagern translatorisch verschiebbar mit den Schienenelementen verbunden ist. So ist es möglich, die Schienenelemente fest mit dem Fahrzeugrahmenabschnitt zu verbinden, so dass das Trägerelement relativ hierzu gleitend bewegbar ist. Die Schienenelemente können vorzugsweise als Strangpressprofile ausgebildet sein, welche sich besonders günstig herstellen lassen und eine zuverlässige Führung bieten, welche sich durch eine besonders geringe Reibung auszeichnen, welche den Wirkungsgrad der Bewegungsentkopplung unmittelbar beeinflusst. Auch in dieser Ausführungsform können entsprechende Anschläge zur Begrenzung des genannten translatorischen Bewegungsumfangs vorgesehen werden. Die Gleitlager sind vorzugsweise als Kunststoffgleitlager ausgebildet und leicht austauschbar angeordnet.

Alternativ zu der rein translatorischen Relativbewegung, kann die Relativbewegung durch eine Drehbewegung des Trägerelements um eine definierte Drehachse relativ zu dem Fahrzeugrahmenabschnitt definiert sein. Dies bedeutet, dass das Trägerelement nicht translatorisch in der Querrichtung des Fahrzeugrahmenabschnitts bewegbar ist. Stattdessen kann das Trägerelement derart mit dem Fahrzeugrahmenabschnitt verbunden sein, dass das Trägerelement hierzu um eine Drehachse drehbar angeordnet ist.

Vorzugsweise kann hierzu die Drehachse im Wesentlichen in Höhenrichtung des Fahrzeugrahmenabschnitts ausgerichtet sein. Entsprechend wird das Trägerelement in einer hierzu senkrechten Bewegungsebene bewegt. Mit anderen Worten bildet also die Drehachse die Normale zu der Bewegungsebene. Beispielsweise ist diese Bewegungsebene im Wesentlichen parallel zu der Oberseite des Fahrzeugrahmenabschnitts angeordnet. Als Ausrichtung im Wesentlichen in Höhenrichtung ist nicht nur eine absolut parallele Ausrichtung der Drehachse zu der Höhenrichtung des Fahrzeugrahmenabschnitts (und damit des gesamten Fahrzeugs) zu verstehen, sondern ebenso eine gegenüber der Höhenrichtung leicht gekippte Ausrichtung der Drehachse von bis zu ca. +/-10° in der Längsrichtung des Fahrzeugrahmenabschnitts. Entsprechend sind die Bewegungsebene des Trägerelements und somit auch das Trägerelement selbst um diesen Winkel gekippt, so dass die Drehachse dennoch als Normale zu der Bewegungsebene ausgerichtet ist. Vorzugsweise ist die Drehachse in jedem Fall auf einer in Längsrichtung ausgerichteten Mittelachse des Fahrzeugrahmenabschnitts angeordnet.

Ein Bewegungsumfang der Relativbewegung kann beispielsweise eine Drehung um die Drehachse um einen maximalen Winkel α zwischen10° ≤ α ≤ +10°, vorzugsweise zwischen -5° ≤ a ≤ +5°, besonders bevorzugt zwischen -3° ≤ α ≤ +3°, umfassen. Dies bedeutet, dass das mit dem Fahrzeugrahmenabschnitt verbundene Trägerelement aus einer mittigen Neutralposition maximal um den Winkel α von bis zu +10° oder um bis zu10° (vorzugsweise maximal +5° und -5°, besonders bevorzugt maximal +3° und -3°) innerhalb der definierten Bewegungsebene gedreht werden kann.

Beispielsweise kann die Drehachse eine reale Drehachse sein, die durch ein Drehlager definiert ist, oder eine virtuelle Drehachse. Im ersten Fall ist das Trägerelement mittels des Drehlagers mit dem Fahrzeugrahmenabschnitt drehbar verbunden, um die beschriebene Relativbewegung bereitzustellen.

Alternativ kann anstelle des definierten Drehlagers aber auch eine Führungskulisse bereitgestellt werden, welche die Drehbewegung des Trägerelements führt, so dass die Drehachse nicht durch ein reales Drehlager definiert wird, sondern lediglich virtuell, also als resultierende Drehachse bereitgestellt wird.

Hierzu kann zum Beispiel das Trägerelement über eine Anzahl von Lagerpunkten relativbeweglich mit dem Fahrzeugrahmenabschnitt verbunden sein, wobei die Lagerpunkte jeweils einen Führungsabschnitt zur Führung der Drehbewegung aufweisen. Auch hierzu können die Lagerpunkte Führungsnuten oder Langlöcher aufweisen, welche als Führungsabschnitte für entsprechende Verbindungsstifte dienen, welche das Trägerelement mit dem Fahrzeugrahmenabschnitt verbinden. Vorzugsweise sind die Verbindungsstifte fest mit dem Fahrzeugrahmenabschnitt verbunden und die Führungsabschnitte dem Trägerelement zugeordnet, beziehungsweise in diesem ausgebildet. Eine umgekehrte Anordnung ist ebenso möglich.

Die Führungsabschnitte sind vorzugsweise derart ausgerichtet, dass diese entweder gerade oder bogenförmig ausgestaltet und jeweils tangential zu einer Kreisbahn der Drehbewegung beziehungsweise auf dieser Kreisbahn liegend angeordnet sind. Eine jeweilige Mindestlänge der Führungsabschnitte ist auf den vorgesehenen Bewegungsumfang abzustimmen.

In jeder der genannten Ausführungsformen kann die definierte Drehachse in Längsrichtung des Fahrzeugrahmenabschnitts vor einem geometrischen Schwerpunkt des Trägerelements angeordnet sein. Auf diese Weise wird eine exzentrische Anordnung bereitgestellt, wobei je nach gewähltem Abstand eine Hebelwirkung zur Drehung des Trägerelements beeinflusst werden kann. Demzufolge stellt die räumliche Anordnung vor dem geometrischen Schwerpunkt eine besonders vorteilhafte Anordnung dar.

Des Weiteren kann die definierte Drehachse innerhalb des Trägerelements angeordnet sein. Dies ist derart zu verstehen, dass die Drehachse eine durch das Trägerelement definierte Fläche schneidet. Auch diese optionale Bedingung bewirkt eine vorteilhafte Beeinflussung der Drehbewegung zur einfachen Abstimmung und besonders hohen Wirkungsweise für die Dämpfung der Pendelbewegungen des Kraftfahrzeugs. Besonders bevorzugt ist die Kombination mit der gleichzeitigen Anordnung vor dem geometrischen Schwerpunkt.

Beispielsweise kann ein Abstand der Drehachse zu einer Vorderseite des Trägerelements weniger als 1/2, vorzugsweise weniger als 1/3, einer in der Längsrichtung des Fahrzeugrahmenabschnitts ausgerichteten Gesamtlänge des Trägerelements entsprechen. Mit anderen Worten dargestellt, ist die Drehachse also in der vorderen Hälfte, vorzugsweise im vorderen Drittel der in Längsrichtung des Fahrzeugrahmenabschnitts erstreckten Gesamtlänge des Trägerelements angeordnet, um eine möglichst optimale exzentrische Anordnung zu erzielen.

Alternativ kann die beschriebene Anordnung der definierten Drehachse in Längsrichtung des Fahrzeugrahmenabschnitts vor dem geometrischen Schwerpunkt des Trägerelements aber auch dadurch erzielt werden, dass die Drehachse nicht innerhalb des Trägerelements angeordnet ist. Stattdessen kann die definierte Drehachse in der Längsrichtung vor dem Trägerelement und damit außerhalb der vom Trägerelement definierten Fläche angeordnet sein.

Jedenfalls können die seitlichen Tragarme optional jeweils mindestens einen Einhängeabschnitt zum lösbaren Einhängen des jeweiligen Gepäckbehältnisses umfassen. Dies bietet die Möglichkeit die Gepäckbehältnisse einfach und sicher an dem Trägerelement zu befestigen. Vorzugsweise weisen die Gepäckbehältnisse in einem (in Höhenrichtung) mittleren oder oberen Bereich einer dem Fahrzeugrahmenabschnitt zugewandten Seite entsprechende Einhängeabschnitte auf.

Des Weiteren wird ein Motorrad oder motorradähnliches Fahrzeug bereitgestellt, mit einer Verbindungsanordnung zur Befestigung der seitlichen Gepäckbehältnisse an dem Motorrad oder motorradähnlichen Fahrzeug, wobei die Verbindungsanordnung gemäß dieser Beschreibung ausgebildet ist.

Als motorradähnliches Fahrzeug sind im Rahmen dieser Beschreibung insbesondere alle Einspurfahrzeuge aber auch Mehrspurfahrzeuge jeweils mit entsprechender, sattelförmiger Sitzbank für den Nutzer zu verstehen, besonders bevorzugt zweirädrige, dreirädrige oder vierrädrige Motorroller beziehungsweise Scooter, aber auch Trikes und Quads.

Zusätzlich und optional kann das Fahrzeug auf einer Fahrzeugseite einen mit einem Fahrzeugrahmen verbundenen starren Befestigungsfortsatz aufweisen, welcher zum lösbaren Verbinden mit dem jeweiligen seitlichen Gepäckbehältnis ausgebildet ist, vorzugsweise zum Verbinden in einem unteren Bereich des Gepäckbehältnisses. Auf diese Weise wird das Gepäckbehältnis in diesem Bereich fahrzeugfest fixiert, vorzugsweise fahrzeugfest aber dennoch drehbar fixiert, so dass das Gepäckbehältnis aufgrund der Verbindung zu dem Trägerelement eine Schwenkbewegung um die fahrzeugfeste Verbindungsstelle mit dem Befestigungsfortsatz beschreibt.

Die beschriebe Verbindungsanordnung bietet mit Hilfe des quer zum Fahrzeugrahmenabschnitt beweglich angeordneten Trägerelements die Möglichkeit einer wirkungsvollen Bewegungsentkopplung und Reduzierung der Pendelneigung des Fahrzeugs. Möglichkeit zur Verbindung der Gepäckbehältnisse mit dem Trägerelement und dessen Verbindung mit dem Fahrzeugrahmenabschnitt bietet einen besonders einfachen kinematischen Aufbau, der wartungsarm ist und auf anfällige Gelenke oder andere bewegliche Zusatzbauteile verzichten kann. Aufgrund des Trägerelements als zentrales

Bauteil bietet sich eine hohe Steifigkeit und eine besonders kompakte und stabile Bauweise, die unauffällig in das Fahrzeug integriert und somit leicht "versteckt" werden kann. Zudem werden aufgrund des Aufbaus der Verbindungsanordnung eine deutliche Spielreduzierung der beweglichen Teile sowie eine verbesserte Krafteinleitung der Kofferlasten in die Verbindungsanordnung und damit in den Fahrzeugheckrahmenabschnitt erzielt, sowie eine verbesserte Maßhaltigkeit der Gepäckbehältnis-Aufhängung.

Die Erfindung wird nachfolgend anhand von Ausführungsbeispielen unter Bezugnahme auf die Zeichnungen näher erläutert. Es zeigen:
- Fig. 1:: eine Draufsicht auf ein Motorrad mit seitlichen Gepäckbehältnissen,
- Fig. 2:: eine Draufsicht auf eine Verbindungsanordnung gemäß der Beschreibung,
- Fig. 3:: eine Draufsicht auf eine erste Ausführungsform der Verbindungsanordnung,
- Fig. 4:: eine Draufsicht auf eine zweite Ausführungsform der Verbindungsanordnung,
- Fig. 5:: eine Seitenansicht der zweiten Ausführungsform aus Fig. 4,
- Fig. 6:: eine Draufsicht auf eine dritte Ausführungsform der Verbindungsanordnung, und
- Fig. 7:: eine Draufsicht auf eine vierte Ausführungsform der Verbindungsanordnung.

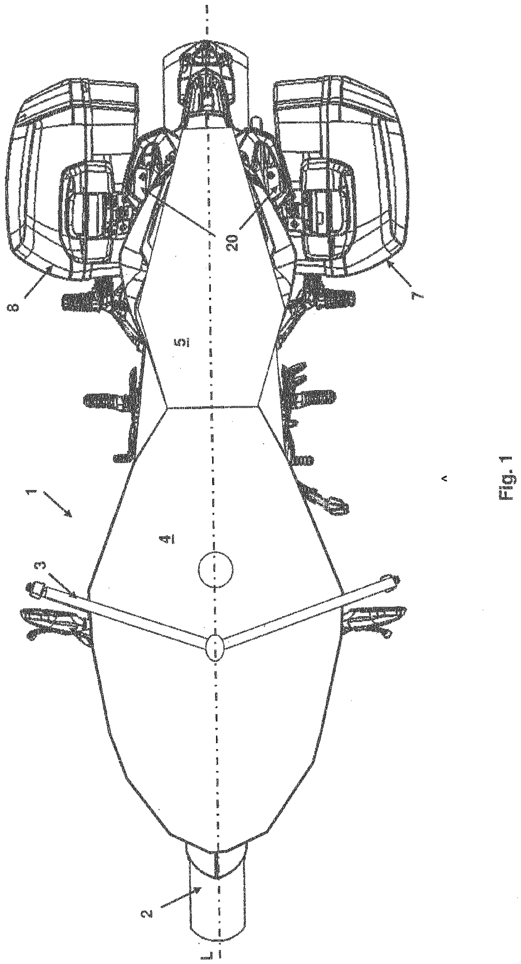

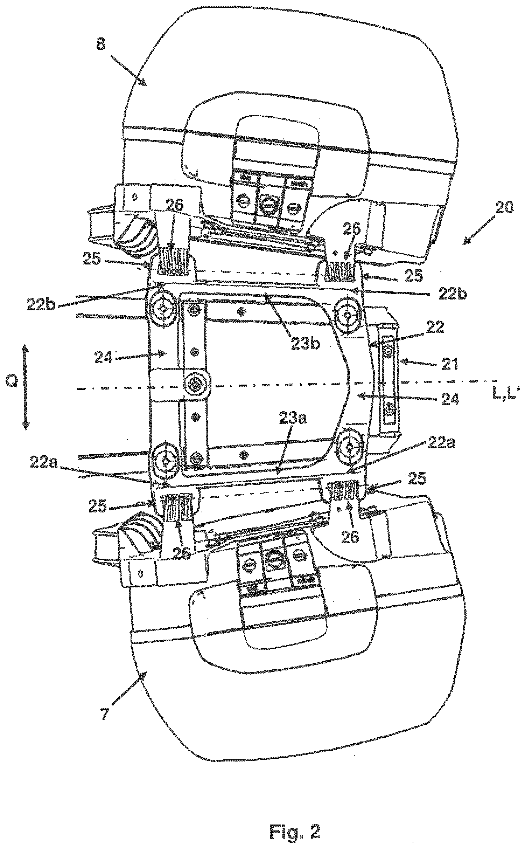

In Fig. 1 ist ein als Motorrad 1 ausgeführtes Kraftfahrzeug mit seitlichen Gepäckbehältnissen 7,8 in einer Draufsicht dargestellt. Das Motorrad 1 ist teilweise zum Zwecke einer besseren Übersichtlichkeit lediglich schematisch dargestellt und umfasst in einer Längsrichtung L ein Vorderrad 2, welches über einen Lenker 3 lenkbar ist. Hinter einem Fahrzeugtank 4 folgt eine Sitzbank 5 für einen Fahrer oder zusätzlich für einen dahinter platzierten Sozius. Unter der Sitzbank 5 ist im hinteren Teil des Motorrades 1, also im Bereich eines Hinterrads (nicht sichtbar), eine Verbindungsanordnung 20 vorgesehen, die in den Fig. 2 bis 7 näher beschrieben wird.

Diese Verbindungsanordnung 20 ist zur Befestigung der seitlichen Gepäckbehältnisse 7,8 an dem Motorrad 1 ausgebildet. Dementsprechend ist mit Hilfe der Verbindungsanordnung 20 auf einer linken Seite des Motorrads 1 ein linkes Gepäckbehältnis 7 und auf der rechten Seite des Motorrads 1 ein rechtes Gepäckbehältnis 8 angeordnet.

Fig. 2 zeigt eine Draufsicht auf die Verbindungsanordnung 20 aus Fig. 1, nachdem zumindest die Sitzbank 5 entfernt wurde.

Wie beschrieben, ist die Verbindungsanordnung 20 zur Befestigung der seitlichen Gepäckbehältnisse 7,8 an dem Motorrad 1 ausgebildet und umfasst hierzu ein Trägerelement 22 und zumindest einen hinteren Fahrzeugrahmenabschnitt 21, der beispielsweise durch einen Heckrahmen des Motorrades definiert und starr mit einem Hauptrahmen (nicht dargestellt) des Motorrads 1 verbunden ist. Der Fahrzeugrahmenabschnitt 21 umfasst beispielhaft einen linken und einen rechten Längsträger, welche im Wesentlichen in der Längsrichtung L' erstreckt und mit einem Verbindungsabschnitt an deren jeweiligem hinteren Ende miteinander verbunden sind. Es versteht sich, dass der Fahrzeugrahmenabschnitt 21 ebenso andere Komponenten und/oder eine abweichende Geometrie aufweisen kann.

Jedenfalls ist das Trägerelement 22 auf einer Oberseite des Fahrzeugrahmenabschnitts 21 sowie quer zu einer Längsrichtung L' des Fahrzeugrahmenabschnitts 21 erstreckt angeordnet. Dies bedeutet auch, dass das Trägerelement 22 in einem verbauten Zustand in Fahrzeughöhenrichtung zwischen der Oberseite des Fahrzeugrahmenabschnitts 21 und der eventuell darüber angeordneten Sitzbank positioniert ist. Die Längsrichtung L' des Fahrzeugrahmenabschnitts 21 ist dabei identisch zu der Längsrichtung L des Motorrads 1.

Alternativ, und daher nicht dargestellt, kann aber auch eine Anordnung unterhalb des Fahrzeugrahmenabschnitts oder innerhalb des Fahrzeugrahmenabschnitts angeordnet sein.

Das Trägerelement 22 ist an einem seitlichen linken Ende 22a zum Verbinden mit dem linken Gepäckbehältnis 7 und an einem seitlichen rechten Ende 22b zum Verbinden mit dem rechten Gepäckbehältnis 8 ausgebildet.

Die Verbindung zwischen dem Trägerelement 22 und dem (in der Fahrzeughöhenrichtung) darunter angeordneten Fahrzeugrahmenabschnitt 21 ist derart ausgebildet, dass das Trägerelement 22 relativbeweglich zu dem Fahrzeugrahmenabschnitt 21 mit diesem verbunden ist.

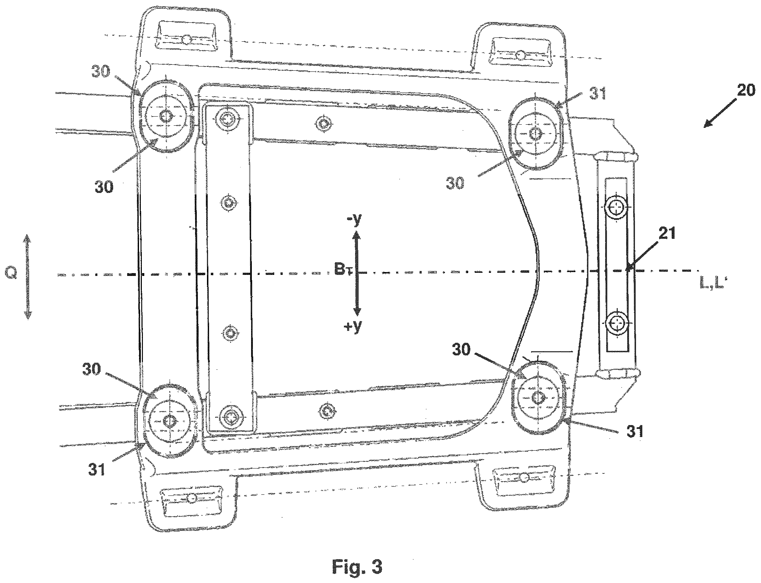

Das Trägerelement 22 umfasst im Bereich des linken 22a und des rechten Endes 22b jeweils einen seitlichen Tragarm 23a,23b sowie zwei die seitlichen Tragarme 23a,23b miteinander verbindende Querträger 24. Außerdem sind die beiden seitlichen Tragarme 23a,23b jeweils zum Verbinden mit dem zugehörigen seitlichen Gepäckbehältnis 7,8 ausgebildet. Hierzu weisen die Tragarme 23a,23b - wie in den Fig. 3 bis 7 erkennbar - an ihren jeweiligen äußeren Enden zwei in Querrichtung Q hervorstehende (also in Richtung der Gepäckbehältnisse 7,8 weisende) Einhängeabschnitte 25 auf, die jeweils eine Vertiefung oder Ausnehmung umfassen, in welche das jeweilige Gepäckbehältnis 7,8 mit jeweils zwei entsprechenden Fortsätzen 26, insbesondere zwei hakenförmigen Fortsätzen beziehungsweise hakenförmigen Hinterschneidungen, eingreifend eingesetzt und im Bedarfsfall entnommen werden kann. Selbstverständlich können anstelle von zwei Fortsätzen ebenso lediglich einer oder mehr als zwei Fortsätze 26 pro Gepäckbehältnis 7,8 vorgesehen werden.

Das Trägerelement 22 ist als Rahmenelement ausgebildet, welches eine nahezu rechteckige oder zumindest trapezförmige Form aufweist, indem die seitlichen Tragarme 23a,23b an ihren Enden jeweils durch einen der beiden Querträger 24 miteinander verbunden sind.

Fig. 3 zeigt eine Draufsicht auf eine erste Ausführungsform der Verbindungsanordnung 20, welche bereits in den Fig. 1 und 2 beschrieben wurde.

Gemäß dieser ersten Ausführungsform wird die Relativbewegung des Trägerelements 22 bezüglich des darunter angeordneten Fahrzeugrahmenabschnitts 21 durch eine translatorische Bewegung B_{T} des Trägerelements 22 quer zu der Längsrichtung L' des Fahrzeugrahmenabschnitts 21, also in der Querrichtung Q, definiert.

Hierzu ist das Trägerelement 22 über eine Anzahl von Lagerpunkten 30, dargestellt sind vier Lagerpunkte 30, translatorisch bewegbar mit dem Fahrzeugrahmenabschnitt 21 verbunden, wobei die Lagerpunkte 30 jeweils einen Führungsabschnitt 31 zur Führung der translatorischen Bewegung B_{T} aufweisen. Für die translatorische Bewegung kann zum Beispiel ein Bewegungsumfang von -20 mm ≤ y ≤ +20 mm, vorzugsweise -10 mm ≤ y ≤ +10 mm, besonders bevorzugt -7 mm ≤ y ≤ +7 mm, vorgesehen sein. Dies bedeutet, dass das mit dem Fahrzeugrahmenabschnitt 21 verbundene Trägerelement 22 aus der dargestellten mittigen Neutralposition wahlweise um bis zu 20 mm, vorzugsweise bis zu 10 mm, besonders bevorzugt bis zu 7 mm, in Richtung der linken Seite oder entsprechend in Richtung der rechten Seite verschoben werden kann. Auf diese Weise wird eine wirkungsvolle Bewegungsentkopplung bereitgestellt, so dass eine wirkungsvolle Dämpfung von Pendelbewegungen des Fahrzeugs 1 ermöglicht wird.

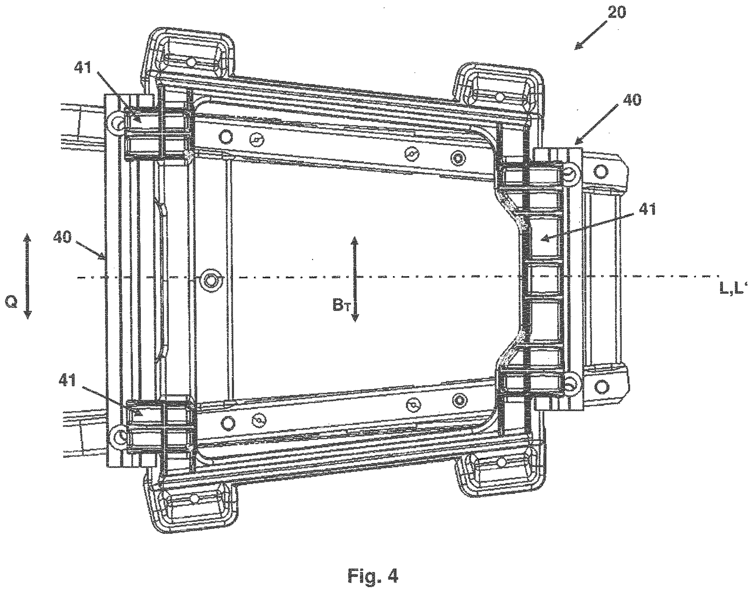

In Fig. 4 ist in einer Draufsicht eine zweite Ausführungsform der Verbindungsanordnung 20 dargestellt, die ebenfalls eine Relativbewegung des Trägerelements 22 bezüglich des darunter angeordneten Fahrzeugrahmenabschnitts 21 durch eine translatorische Bewegung B_{T} des Trägerelements 22 quer zu der Längsrichtung L' des Fahrzeugrahmenabschnitts 21, also in der Querrichtung Q, vorsieht.

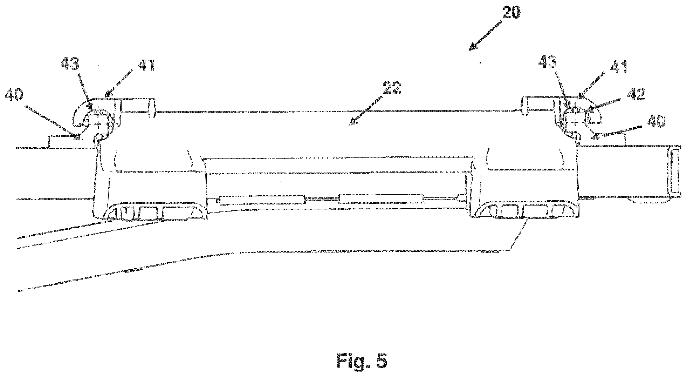

Im Gegensatz zu der in Fig. 3 dargestellten ersten Ausführungsform umfasst die Verbindungsanordnung 20 zwei quer zur Längsrichtung L' des Fahrzeugrahmenabschnitts 21 ausgerichtete Schienenelemente 40. Diese sind in der Längsrichtung L' parallel beabstandet zueinander angeordnet, so dass das Trägerelement 22 mittels in Fig. 5 näher dargestellten Gleitlagern 43 translatorisch verschiebbar mit den Schienenelementen 40 verbunden ist.

Wie die in Fig. 5 dargestellte Seitenansicht der zweiten Ausführungsform zeigt, weist das Trägerelement 22 in der dargestellten Ausführungsform in Richtung der Schienenelemente 40 erstreckte Fortsätze 41 auf, welche Ausnehmungen 42 umfassen, welche 42 die Schienenelemente 40 teilweise umgreifen und in denen die Gleitlager 43 angeordnet sind. Wie dargestellt, können die Schienenelemente 40 zum Beispiel als Stangpressprofile ausgebildet sein.

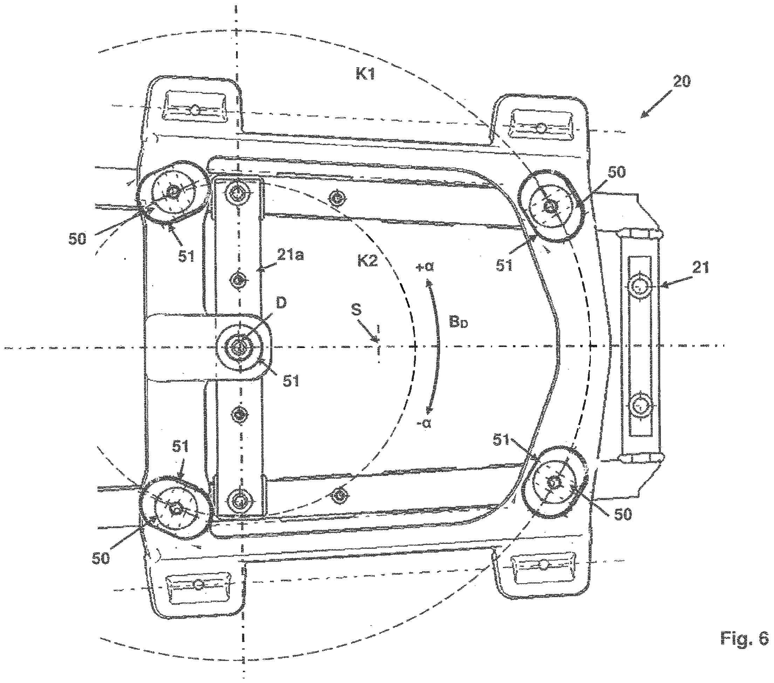

Fig. 6 zeigt eine Draufsicht auf eine dritte Ausführungsform der Verbindungsanordnung 20. Diese stimmt im Wesentlichen mit den anderen Ausführungsformen überein, so dass für gleiche oder zumindest gleichwirkende Komponenten dieselben Bezugszeichen Verwendung finden und auf die Beschreibungen der Fig. 1 bis 5 verwiesen wird.

Die dargestellte dritte Ausführungsform unterscheidet sich dadurch, dass die Relativbewegung durch eine Drehbewegung B_{D} des Trägerelements 22 um eine definierte Drehachse D relativ zu dem Fahrzeugrahmenabschnitt 21 definiert ist. Hierbei ist die Drehachse D in Höhenrichtung des Fahrzeugrahmenabschnitts 21 beziehungsweise des gesamten Motorrads 1 ausgerichtet (also senkrecht zur Bildebene der Fig. 6). Die Drehachse D wird durch eine reale Drehachse D gebildet, die durch ein Drehlager 51 definiert ist. In der dargestellten Ausführungsform ist die Drehachse D in Querrichtung betrachtet in einer Mitte, also auf der Längsrichtung L' des Fahrzeugrahmenabschnitts 21 angeordnet. Hierzu ist das Drehlager D mit einem die beiden Längsträger des Fahrzeugrahmenabschnitts 21 verbindenden Rahmenquerträger 21a verbunden.

Ein Bewegungsumfang der Relativbewegung, also der Drehbewegung B_{D}, kann beispielsweise eine Drehung um die Drehachse D um einen maximalen Winkel α zwischen -10° ≤ α ≤ +10°, vorzugsweise zwischen -5° ≤ α ≤ +5°, besonders bevorzugt zwischen -3° ≤ α ≤ +3°, umfassen. Dies bedeutet, dass das mit dem Fahrzeugrahmenabschnitt 21 verbundene Trägerelement 22 aus einer mittigen Neutralposition (also ausgehend von einer Ausrichtung in der Längsrichtung L') maximal um den Winkel α von bis zu +10° oder um bis zu -10° (vorzugsweise maximal +5° und -5°, besonders bevorzugt maximal +3° und -3°) innerhalb der definierten Bewegungsebene gedreht werden kann.

Um eine sichere Führung der Drehbewegung B_{D} um die Drehachse D zu erzielen, ist optional das Trägerelement 22 zusätzlich zu dem Drehlager D über eine Anzahl von Lagerpunkte 50 relativbeweglich mit dem Fahrzeugrahmenabschnitt 21 verbunden, wobei die Lagerpunkte 50 jeweils einen Führungsabschnitt 51 zur Führung der Drehbewegung B_{D} aufweisen. Dargestellt sind vier Lagerpunkte 50, wobei ebenso lediglich zwei oder aber auch mehr als vier Lagerpunkte vorgesehen sein können.

Vorzugsweise sind die Führungsabschnitte 51 jeweils als Langloch oder gekrümmte Führungsnut ausgebildet, die tangential zu einer jeweiligen Kreisbahn K1, K2 oder mit ihrer Krümmung entlang der jeweiligen Kreisbahn K1,K2 angeordnet sind. Die Zentren aller Kreisbahnen K1,K2 sind koaxial zur Drehachse D angeordnet.

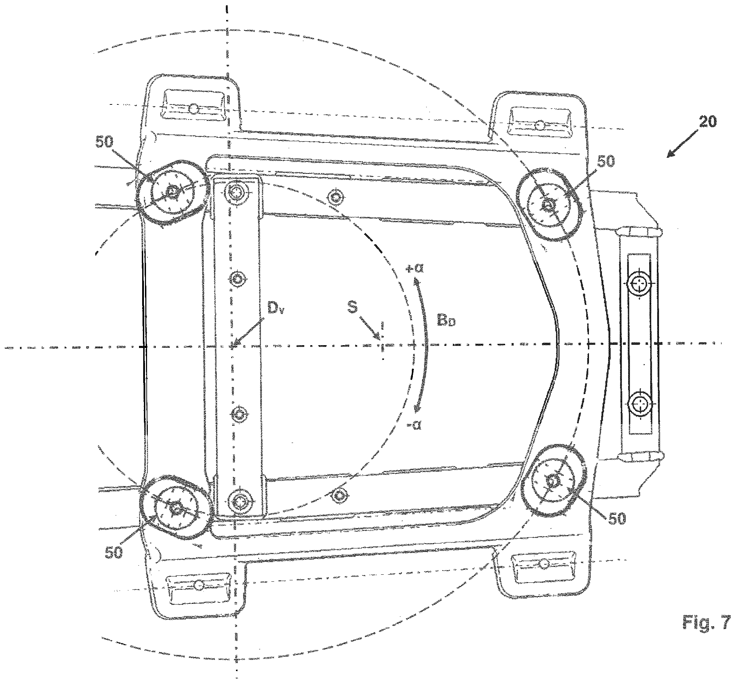

Fig. 7 zeigt eine Draufsicht auf eine vierte Ausführungsform der Verbindungsanordnung 20. Diese stimmt im Wesentlichen mit der dritten Ausführungsform gemäß Fig. 6 überein, so dass für gleiche oder zumindest gleichwirkende Komponenten dieselben Bezugszeichen Verwendung finden und auf die Beschreibungen der Fig. 6 verwiesen wird.

Die dargestellte vierte Ausführungsform sieht ebenfalls eine Relativbewegung vor, die durch eine Drehbewegung B_{D} des Trägerelements 22 um eine definierte Drehachse Dᵥ relativ zu dem Fahrzeugrahmenabschnitt 21 definiert ist.

Im Unterschied zu der dritten Ausführungsform wird jedoch auf die reale Drehachse beziehungsweise ein die Drehachse D definierendes Drehlager 51 verzichtet. Stattdessen wird eine virtuelle Drehachse Dᵥ vorgesehen.

Diese wird dadurch bereitgestellt, dass das Trägerelement 22 allein über die Anzahl von Lagerpunkten 50 relativbeweglich mit dem Fahrzeugrahmenabschnitt 21 verbunden ist, wobei die Lagerpunkte 50 jeweils einen Führungsabschnitt 51 zur Führung der Drehbewegung aufweisen. Ein Bewegungsumfang der Drehbewegung B_{D} wird gemäß der dritten Ausführungsform gewählt.

Für beide Ausführungsformen mit drehbeweglichem Trägerelement 22, also die dritte und vierte Ausführungsform, ist die definierte Drehachse D in Längsrichtung L' des Fahrzeugrahmenabschnitts 21 vor einem geometrischen Schwerpunkt S des Trägerelements 22 angeordnet. Zusätzlich ist die definierte Drehachse D innerhalb des Trägerelements 22 angeordnet und schneidet die durch das Trägerelement 22 definierte und begrenzte Fläche.

Alternativ, und daher nicht dargestellt, kann die definierte reale oder die virtuelle Drehachse D,Dᵥ in der Längsrichtung L vor dem Trägerelement 22 angeordnet sein.

## Patentansprüche

1. Verbindungsanordnung (20) zur Befestigung von seitlichen Gepäckbehältnissen (7,8) an einem Motorrad oder einem motorradähnlichen Fahrzeug, mit:
- einem hinteren Fahrzeugrahmenabschnitt (21), und
- einem Trägerelement (22), welches quer zu einer Längsrichtung (L') des Fahrzeugrahmenabschnitts (21) erstreckt ausgebildet ist und an einem seitlichen linken Ende (22a) zum Verbinden mit einem linken Gepäckbehältnis (7) und an einem seitlichen rechten Ende (22b) zum Verbinden mit einem rechten Gepäckbehältnis (8) ausgebildet ist,
wobei das Trägerelement (22) relativbeweglich zu dem Fahrzeugrahmenabschnitt (21) mit diesem verbunden ist und
das Trägerelement (22) im Bereich des linken (22a) und des rechten Endes (22b) jeweils einen seitlichen Tragarm (23a,23b) umfasst, **dadurch gekennzeichnet, dass** das Trägerelement (22) zwei die seitlichen Tragarme (23a, 23b) miteinander verbindende Querträger (24) umfasst,
wobei die beiden seitlichen Tragarme (23a,23b) jeweils zum Verbinden mit dem jeweils zugehörigen seitlichen Gepäckbehältnis (7,8) ausgebildet sind, wobei das Trägerelement (22) als Rahmenelement ausgebildet ist, wobei die seitlichen Tragarme (23a,23b) an ihren Enden jeweils durch einen der beiden Querträger (24) miteinander verbunden sind.

2. Verbindungsanordnung (20) nach Anspruch 1, **dadurch gekennzeichnet, dass** die Relativbewegung durch eine translatorische Bewegung (B_{T}) quer zu der Längsrichtung (L') des Fahrzeugrahmenabschnitts (21) definiert ist.

3. Verbindungsanordnung (20) nach Anspruch 2, **dadurch gekennzeichnet, dass** das Trägerelement (22) über eine Anzahl von Lagerpunkten (30) translatorisch bewegbar mit dem Fahrzeugrahmenabschnitt (21) verbunden ist, wobei die Lagerpunkte (30) jeweils einen Führungsabschnitt (31) zur Führung der translatorischen Bewegung (B_{T}) aufweisen.

4. Verbindungsanordnung (20) nach Anspruch 2 oder 3, **dadurch gekennzeichnet, dass** die Verbindungsanordnung (20) mindestens zwei quer zur Längsrichtung (L') des Fahrzeugrahmenabschnitts (21) ausgerichtete Schienenelemente (40) umfasst, wobei das Trägerelement (22) mittels Gleitlagern (43) translatorisch verschiebbar mit den Schienenelementen (40) verbunden ist.

5. Verbindungsanordnung (20) nach Anspruch 1, **dadurch gekennzeichnet, dass** die Relativbewegung durch eine Drehbewegung (B_{D}) des Trägerelements (22) um eine definierte Drehachse (D) relativ zu dem Fahrzugrahmenabschnitt (21) definiert ist.

6. Verbindungsanordnung (20) nach Anspruch 5, **dadurch gekennzeichnet, dass** die Drehachse (D) im Wesentlichen in Höhenrichtung des Fahrzeugrahmenabschnitts (21) ausgerichtet ist.

7. Verbindungsanordnung (20) nach Anspruch 5 oder 6, **dadurch gekennzeichnet, dass** die Drehachse (D) eine reale Drehachse ist, die durch ein Drehlager (51) definiert ist, oder eine virtuelle Drehachse (Dv) ist.

8. Verbindungsanordnung (20) nach einem der Ansprüche 5 bis 7,
**dadurch gekennzeichnet, dass** das Trägerelement (20) über eine Anzahl von Lagerpunkten (50) relativbeweglich mit dem Fahrzeugrahmenabschnitt (21) verbunden ist, wobei die Lagerpunkte (50) jeweils einen Führungsabschnitt (51) zur Führung der Drehbewegung (B_{D}) aufweisen.

9. Verbindungsanordnung (20) nach einem der Ansprüche 5 bis 8, **dadurch gekennzeichnet, dass** die definierte Drehachse (D,Dᵥ) in Längsrichtung (L') des Fahrzeugrahmenabschnitts (21) vor einem geometrischen Schwerpunkt (S) des Trägerelements (22) angeordnet ist.

10. Verbindungsanordnung (20) nach einem der Ansprüche 5 bis 9, **dadurch gekennzeichnet, dass** die definierte Drehachse (D,Dᵥ) innerhalb des Trägerelements (22) angeordnet ist.

11. Verbindungsanordnung (20) nach einem der Ansprüche 1 bis 10, **dadurch gekennzeichnet, dass** die seitlichen Tragarme (23a,23b) jeweils mindestens einen Einhängeabschnitt (25) zum lösbaren Einhängen des jeweiligen Gepäckbehältnisses (7,8) umfassen.

12. Motorrad oder motorradähnliches Fahrzeug, mit einer Verbindungsanordnung (20) zur Befestigung von seitlichen Gepäckbehältnissen (7,8) an dem Motorrad oder motorradähnlichen Fahrzeug (1), **dadurch gekennzeichnet, dass** die Verbindungsanordnung (20) nach einem der Ansprüche 1 bis 11 ausgebildet ist.

13. Motorrad oder motorradähnliches Fahrzeug (1) nach Anspruch 12, **dadurch gekennzeichnet, dass** das Motorrad oder motorradähnliche Fahrzeug (1) auf einer Fahrzeugseite einen mit einem Fahrzeugrahmen verbundenen starren Befestigungsfortsatz aufweist, welcher zum lösbaren Verbinden mit dem jeweiligen seitlichen Gepäckbehältnis (7,8) ausgebildet ist, vorzugsweise zum Verbinden in einem unteren Bereich des Gepäckbehältnisses (7,8).

## Claims

1. Connecting arrangement (20) for the fastening of lateral luggage containers (7, 8) to a motorcycle or to a motorcycle-like vehicle, having:
- a rear vehicle frame portion (21), and
- a carrier element (22) which is designed so as to extend transversely with respect to a longitudinal direction (L') of the vehicle frame portion (21) and which, at a lateral left-hand end (22a), is designed for connection to a left-hand luggage container (7) and, at a lateral right-hand end (22b), is designed for connection to a right-hand luggage container (8),
wherein the carrier element (22) is connected to the vehicle frame portion (21) so as to be movable relative thereto, and the carrier element (22) comprises in each case one lateral carrying arm (23a, 23b) in the region of the left-hand end (22a) and of the right-hand end (22b), **characterized in that** the carrier element (22) comprises two transverse members (24) which connect the lateral carrying arms (23a, 23b) to one another, wherein the two lateral carrying arms (23a, 23b) are each designed for connection to the respectively associated lateral luggage container (7, 8), wherein the carrier element (22) is designed as a frame element, wherein the lateral carrying arms (23a, 23b) are in each case connected to one another at their ends by means of one of the two transverse members (24).

2. Connecting arrangement (20) according to Claim 1, **characterized in that** the relative movement is defined by a translational movement (B_{T}) transversely with respect to the longitudinal direction (L') of the vehicle frame portion (21).

3. Connecting arrangement (20) according to Claim 2, **characterized in that** the carrier element (22) is connected in translationally movable fashion to the vehicle frame portion (21) by means of a number of bearing points (30), wherein the bearing points (30) each have a guide portion (31) for the guidance of the translational movement (B_{T}).

4. Connecting arrangement (20) according to Claim 2 or 3, **characterized in that** the connecting arrangement (20) comprises at least two rail elements (40) which are aligned transversely with respect to the longitudinal direction (L') of the vehicle frame portion (21), wherein the carrier element (22) is connected in translationally displaceable fashion to the rail elements (40) by means of plain bearings (43) .

5. Connecting arrangement (20) according to Claim 1, **characterized in that** the relative movement is defined by a rotational movement (B_{D}) of the carrier element (22) about a defined axis of rotation (D) relative to the vehicle frame portion (21).

6. Connecting arrangement (20) according to Claim 5, **characterized in that** the axis of rotation (D) is aligned substantially in a vertical direction of the vehicle frame portion (21).

7. Connecting arrangement (20) according to Claim 5 or 6, **characterized in that** the axis of rotation (D) is a real axis of rotation, which is defined by a rotary bearing (51), or a virtual axis of rotation (Dv) .

8. Connecting arrangement (20) according to any of Claims 5 to 7, **characterized in that** the carrier element (20) is connected in a relatively movable manner to the vehicle frame portion (21) by means of a number of bearing points (50), wherein the bearing points (50) each have a guide portion (51) for the guidance of the rotational movement (B_{D}).

9. Connecting arrangement (20) according to any of Claims 5 to 8, **characterized in that** the defined axis of rotation (D, Dᵥ) is arranged in front of a geometrical centre of gravity (S) of the carrier element (22) in the longitudinal direction (L') of the vehicle frame portion (21).

10. Connecting arrangement (20) according to any of Claims 5 to 9, **characterized in that** the defined axis of rotation (D, Dᵥ) is arranged within the carrier element (22).

11. Connecting arrangement (20) according to any of Claims 1 to 10, **characterized in that** the lateral carrying arms (23a, 23b) each comprise at least one hook-in portion (25) for the detachable hooking-in of the respective luggage container (7, 8).

12. Motorcycle or motorcycle-like vehicle, having a connecting arrangement (20) for the fastening of lateral luggage containers (7, 8) to the motorcycle or motorcycle-like vehicle (1), **characterized in that** the connecting arrangement (20) is designed according to any of Claims 1 to 11.

13. Motorcycle or motorcycle-like vehicle (1) according to Claim 12, **characterized in that** the motorcycle or motorcycle-like vehicle (1) has, on a vehicle side, a rigid fastening projection which is connected to a vehicle frame and which is designed for detachable connection to the respective lateral luggage container (7, 8), preferably for connection in a lower region of the luggage container (7, 8).

## Revendications

1. Ensemble de liaison (20) servant à la fixation de contenants à bagages latéraux (7, 8) à une motocyclette ou à un véhicule similaire à une motocyclette, comportant :
- une partie de cadre de véhicule arrière (21), et
- un élément de support (22), lequel est réalisé de manière à s'étendre transversalement à une direction longitudinale (L') de la partie du cadre de véhicule (21) et est réalisé pour être relié à un contenant à bagages gauche (7) à une extrémité latérale gauche (22a) et pour être relié à un contenant à bagages droit (8) à une extrémité latérale droite (22b),
l'élément de support (22) étant relié à la partie de cadre de véhicule (21) de manière mobile relativement par rapport à celle-ci et
l'élément de support (22) comportant, dans la région de l'extrémité gauche (22a) et de l'extrémité droite (22b), respectivement un bras de support latéral (23a, 23b), **caractérisé en ce que** l'élément de support (22) comporte deux traverses (24) reliant l'un à l'autre les bras de supports latéraux (23a, 23b),
les deux bras de supports latéraux (23a, 23b) étant réalisés respectivement pour être reliés au contenant à bagages latéral (7, 8) associé respectivement, l'élément de support (22) étant réalisé sous forme d'élément de cadre, les bras de supports latéraux (23a, 23b) étant reliés l'un à l'autre à leurs extrémités respectivement au moyen de l'une des deux traverses (24).

2. Ensemble de liaison (20) selon la revendication 1, **caractérisé en ce que** le mouvement relatif est défini par un mouvement de translation (B_{T}) transversalement à la direction longitudinale (L') de la partie de cadre de véhicule (21).

3. Ensemble de liaison (20) selon la revendication 2, **caractérisé en ce que** l'élément de support (22) est relié à la partie de cadre de véhicule (21) de manière mobile en translation par le biais d'un certain nombre de points de palier (30), les points de palier (30) comprenant respectivement une partie de guidage (31) servant au guidage du mouvement de translation (B_{T}).

4. Ensemble de liaison (20) selon la revendication 2 ou 3, **caractérisé en ce que** l'ensemble de liaison (20) comporte au moins deux éléments rails (40) orientés transversalement à la direction longitudinale (L') de la partie de cadre de véhicule (21), l'élément de support (22) étant relié de manière déplaçable en translation aux éléments rails (40) au moyen de paliers lisses (43).

5. Ensemble de liaison (20) selon la revendication 1, **caractérisé en ce que** le mouvement relatif est défini par un mouvement rotatif (B_{D}) de l'élément de support (22) autour d'un axe de rotation défini (D) par rapport à la partie de cadre de véhicule (21).

6. Ensemble de liaison (20) selon la revendication 5, **caractérisé en ce que** l'axe de rotation (D) est orienté sensiblement dans la direction de la hauteur de la partie de cadre de véhicule (21).

7. Ensemble de liaison (20) selon la revendication 5 ou 6, **caractérisé en ce que** l'axe de rotation (D) est un axe de rotation réel qui est défini par un palier de rotation (51), ou est un axe de rotation virtuel (Dᵥ).

8. Ensemble de liaison (20) selon l'une des revendications 5 à 7, **caractérisé en ce que** l'élément de support (20) est relié à la partie de cadre de véhicule (21) de manière mobile relativement par le biais d'un certain nombre de points de palier (50), les points de palier (50) comprenant respectivement une partie de guidage (51) servant au guidage du mouvement de rotation (B_{D}).

9. Ensemble de liaison (20) selon l'une des revendications 5 à 8, **caractérisé en ce que** l'axe de rotation défini (D, Dv) est disposé devant un barycentre géométrique (S) de l'élément de support (22) dans la direction longitudinale (L') de la partie de cadre de véhicule (21).

10. Ensemble de liaison (20) selon l'une des revendications 5 à 9, **caractérisé en ce que** l'axe de rotation défini (D, Dᵥ) est disposé à l'intérieur de l'élément de support (22).

11. Ensemble de liaison (20) selon l'une des revendications 1 à 10, **caractérisé en ce que** les bras de support latéraux (23a, 23b) comportent respectivement au moins une partie d'accrochage (25) pour l'accrochage libérable du contenant à bagages (7, 8) respectif.

12. Motocyclette ou véhicule similaire à une motocyclette, comportant un ensemble de liaison (20) servant à la fixation de contenants à bagages latéraux (7, 8) à la motocyclette ou au véhicule (1) similaire à une motocyclette, caractérisé(e) en ce que l'ensemble de liaison (20) est réalisé selon l'une des revendications 1 à 11.

13. Motocyclette ou véhicule (1) similaire à une motocyclette selon la revendication 12, caractérisé(e) en ce que la motocyclette ou le véhicule (1) similaire à une motocyclette comprend, sur un côté de véhicule, une saillie de fixation rigide reliée à un cadre de véhicule, laquelle est réalisée pour être reliée de manière amovible au contenant à bagages (7, 8) latéral respectif, de préférence pour être reliée dans une région inférieure du contenant à bagages (7, 8).
